# EUROPEAN PATENT APPLICATION

(11) **EP 4 830 824 A1**
(43) Date of publication of application: **28.10.2026**
(21) Application number: 23962032.1
(22) Date of filing: 23.12.2023
(51) Int. Cl.: B01J 8/24

(54) **HIGH-DENSITY FAST FLUIDIZED BED REACTOR, APPARATUS FOR PREPARING LIGHT OLEFINS BY MEANS OF CATALYTIC CRACKING, AND METHOD THEREOF**

(30) Priority: 19.12.2023 CN 202311757550
(71) Applicant: Dalian Institute Of Chemical Physics, Chinese Academy Of Sciences, Liaoning 116023 (CN)
(72) Inventor: YE, Mao, Dalian, Liaoning 116023 (CN); ZHANG, Tao, Dalian, Liaoning 116023 (CN); ZHANG, Jinling, Dalian, Liaoning 116023 (CN); JIA, Jinming, Dalian, Liaoning 116023 (CN); TANG, Hailong, Dalian, Liaoning 116023 (CN); WANG, Jing, Dalian, Liaoning 116023 (CN); ZHANG, Cheng, Dalian, Liaoning 116023 (CN); MA, Xiangang, Dalian, Liaoning 116023 (CN); WANG, Xiangao, Dalian, Liaoning 116023 (CN); XU, Shuliang, Dalian, Liaoning 116023 (CN); LIU, Zhongmin, Dalian, Liaoning 116023 (CN)
(74) Representative: Barker Brettell LLP
(86) International application number: PCT/CN2023/141299
(87) International publication number: WO 2025/129710

(57) **Abstract**

The present application discloses a high-density fast fluidized bed reactor, an apparatus for catalytic cracking to produce light olefins, and a method thereof. The apparatus comprises a high-density fast fluidized bed reactor and a fluidized bed regenerator. In the high-density fast fluidized bed reactor, the catalyst circulation intensity from the catalyst residence zone to the reaction zone is as high as 500-1000 kg/(m²·s), thereby increasing the bed density in the reaction zone and achieving a high bed density under high superficial gas velocity conditions. The method achieves a continuous mixed hydrocarbon catalytic cracking process for light olefins through a fluidized bed reaction-regeneration process, and supplies heat for the reaction by injecting and combusting fuel oil. The reaction contact time of the product gas in the high-density fast fluidized bed reactor is <2 s, effectively improving light olefin selectivity. In this method, the single-pass conversion rate of the feedstock is ≥50% wt, the selectivity for ethylene + propylene is ≥70% wt, and the propylene/ethylene (mass ratio) is ≥3.

## Description

### TECHNICAL FIELD

The present application relates to a high-density fast fluidized bed reactor, an apparatus for catalytic cracking to produce light olefins, and a method thereof, belonging to the field of chemical catalysis.

### BACKGROUND

Olefins are important basic organic chemical raw materials and the cornerstone of the modern chemical industry. The main technical routes for olefin production include naphtha cracking to olefins, methanol-to-olefins, propane dehydrogenation to propylene, alkane cracking to olefins, and olefin cracking to olefins. Light olefins are very reactive and prone to polymerization, alkylation, aromatization, and other reactions, forming by-products and reducing the yield of light olefins.

UOP developed the Olefin Cracking Process (OCP) technology, where C₄-C₈ olefin feedstock is converted to ethylene and propylene under conditions of high temperature and low pressure, with a propylene-to-ethylene ratio of about 4:1. The OCP unit has two radial flow reactors, one online and the other on standby for regeneration. The regeneration cycle of the reactor is 48 hours. Switching between online operation and offline regeneration is achieved by a valve group at the reactor inlet and outlet.

Sinopec developed the Olefin Catalytic Cracking (OCC) technology, where olefins in a mixed C₄-C₆ feedstock are cracked into propylene, ethylene, etc. over a molecular sieve catalyst. The OCC unit has two fixed-bed reactors, one in operation and one on standby. The reaction system operates in a continuous switching mode, and the catalyst regeneration process is controlled by an automatic switching regeneration program.

The catalytic cracking reaction to produce light olefins is strongly endothermic. Radial flow reactors and fixed-bed reactors generally supply heat by increasing the feed temperature of the raw materials. However, excessively high preheating temperatures of feedstock components such as olefins, dienes, and alkynes can cause coking, affecting continuous operation. Additionally, the catalyst gradually loses activity during the reaction, requiring reactor switching for continuous operation. The challenges of heat supply and deactivation limit the development and progress of radial flow reactor and fixed-bed reactor technologies.

### SUMMARY

Light olefins are very reactive and prone to polymerization, alkylation, aromatization, and other reactions, forming by-products and reducing the yield of light olefins. Reaction contact time is an important factor affecting the selectivity of light olefins in the catalytic cracking process of mixed hydrocarbons to produce light olefins. Increasing the superficial gas velocity in the reaction zone of a fluidized bed reactor can reduce reaction contact time and improve light olefin selectivity. However, the bed density in the reaction zone usually decreases significantly, and the catalyst inventory also drops substantially, leading to a decrease in the conversion rate of the cracking feedstock. That is, there is a negative correlation between light olefin selectivity and feedstock conversion rate.

To improve the yield of light olefins and the conversion rate of the cracking feedstock, according to a first aspect of the present application, a high-density fast fluidized bed reactor is provided.

A high-density fast fluidized bed reactor comprises a reactor outer shell, a reactor inner shell, and a delivery pipe;
the reactor inner shell is located in the lower part of the reactor outer shell;
the delivery pipe is located in the central region of the upper middle part of the high-density fast fluidized bed reactor;
the region enclosed by the reactor inner shell is a reaction zone;
the bottom end of the delivery pipe is connected to the top of the reaction zone;
the annular region enclosed by the reactor outer shell and the reactor inner shell is a catalyst residence zone;
the bottom of the reaction zone is in communication with the bottom of the catalyst residence zone;
the region enclosed by the reactor outer shell and the delivery pipe is a gas-solid separation zone;
the catalyst residence zone is in communication with the gas-solid separation zone and is located below the gas-solid separation zone.

Optionally, the bottom end of the delivery pipe is in communication with the top of the reaction zone.

Optionally, the high-density fast fluidized bed reactor comprises a catalyst distribution pipe, a fluidizing steam distributor, and a feedstock distributor;
the catalyst distribution pipe penetrates the reactor inner shell, connecting the catalyst residence zone and the reaction zone;
the fluidizing steam distributor is located at the bottom of the catalyst residence zone;
the feedstock distributor is located at the bottom of the reaction zone;

Optionally, the lower surface of the catalyst distribution pipe has openings.

Optionally, the high-density fast fluidized bed reactor comprises a first gas-solid separation device and a second gas-solid separation device;
the first gas-solid separation device and the second gas-solid separation device are located in the gas-solid separation zone;
the inlet of the first gas-solid separation device is connected to the outlet of the delivery pipe;
the catalyst outlet of the first gas-solid separation device is located in the lower part of the gas-solid separation zone, and the gas outlet of the first gas-solid separation device is located in the upper part of the gas-solid separation zone;
the catalyst outlet of the second gas-solid separation device is located in the lower part of the gas-solid separation zone.

Optionally, the first gas-solid separation device surrounds the delivery pipe.

Optionally, the first gas-solid separation device employs an inertial separator to achieve rapid separation of product gas and catalyst.

Optionally, the second gas-solid separation device employs one or more groups of gas-solid cyclones, each group comprising a first-stage gas-solid cyclone and a second-stage gas-solid cyclone.

Optionally, the high-density fast fluidized bed reactor comprises a reactor gas collection chamber and a product gas delivery pipe;
the reactor gas collection chamber is located at the top of the high-density fast fluidized bed reactor;
the product gas delivery pipe is connected to the top of the reactor gas collection chamber;
the gas outlet of the second gas-solid separation device is connected to the reactor gas collection chamber;

As a preferred embodiment, the high-density fast fluidized bed reactor comprises: a reactor outer shell, a reactor inner shell, a delivery pipe, a feedstock distributor, a first gas-solid separation device, a fluidizing steam distributor, a catalyst distribution pipe, a second gas-solid separation device, a reactor gas collection chamber, a product gas delivery pipe, a catalyst withdrawal pipe, a reactor stripper, a spent catalyst slide valve, and a spent catalyst delivery pipe.

The region enclosed by the reactor inner shell is a reaction zone. The annular region enclosed by the reactor outer shell and the reactor inner shell is a catalyst residence zone. The bottom of the reaction zone is in communication with the bottom of the catalyst residence zone. The region enclosed by the reactor outer shell and the delivery pipe is a gas-solid separation zone. The catalyst residence zone is in communication with the gas-solid separation zone and is located below the gas-solid separation zone.

The feedstock distributor is located at the bottom of the reaction zone. The delivery pipe is located in the central region of the upper middle part of the high-density fast fluidized bed reactor. The bottom end of the delivery pipe is connected to the top of the reaction zone. The outlet of the delivery pipe is connected to the inlet of the first gas-solid separation device.

The first gas-solid separation device is located in the gas-solid separation zone. The catalyst outlet of the first gas-solid separation device is located in the lower part of the gas-solid separation zone, and the gas outlet of the first gas-solid separation device is located in the upper part of the gas-solid separation zone.

The fluidizing steam distributor is located at the bottom of the catalyst residence zone.

The catalyst distribution pipe penetrates the reactor inner shell, connecting the catalyst residence zone and the reaction zone. The lower surface of the catalyst distribution pipe has openings.

The second gas-solid separation device is located in the gas-solid separation zone. The inlet of the second gas-solid separation device is located in the gas-solid separation zone. The gas outlet of the second gas-solid separation device is connected to the reactor gas collection chamber. The catalyst outlet of the second gas-solid separation device is located in the lower part of the gas-solid separation zone.

The reactor gas collection chamber is located at the top of the high-density fast fluidized bed reactor. The product gas delivery pipe is connected to the top of the reactor gas collection chamber.

The catalyst withdrawal pipe penetrates the reactor outer shell and is located in the lower part of the catalyst residence zone.

The reactor stripper is connected to the catalyst withdrawal pipe. The inlet of the spent catalyst slide valve is connected to the bottom of the reactor stripper. The outlet of the spent catalyst slide valve is connected to the inlet of the spent catalyst delivery pipe. The outlet of the spent catalyst delivery pipe is connected to a fluidized bed regenerator.

According to a second aspect of the present application, an apparatus for catalytic cracking to produce light olefins is provided.
an apparatus for catalytic cracking to produce light olefins comprises the high-density fast fluidized bed reactor described above and a fluidized bed regenerator;
a catalyst withdrawal pipe penetrates the reactor outer shell and is located in the lower part of the catalyst residence zone; a reactor stripper is connected to the catalyst withdrawal pipe; an inlet of a spent catalyst slide valve is connected to the bottom of the reactor stripper; an outlet of the spent catalyst slide valve is connected to an inlet of a spent catalyst delivery pipe; an outlet of the spent catalyst delivery pipe is connected to the middle part of the fluidized bed regenerator;
a regenerator stripper is located at the bottom of the fluidized bed regenerator; an inlet of a regenerated catalyst slide valve is connected to the bottom of the regenerator stripper; an outlet of the regenerated catalyst slide valve is connected to an inlet of a regenerated catalyst delivery pipe; an outlet of the regenerated catalyst delivery pipe is connected to the lower part of the gas-solid separation zone of the high-density fast fluidized bed reactor.

Optionally, the fluidized bed regenerator comprises a regenerator shell, a regenerator distributor, a fuel oil distributor, a third gas-solid separation device, a regenerator gas collection chamber, and a flue gas delivery pipe;
the regenerator distributor is located at the bottom of the fluidized bed regenerator;
the fuel oil distributor is located above the regenerator distributor;
the third gas-solid separation device is located in the upper part of the fluidized bed regenerator. an inlet of the third gas-solid separation device is located in the upper part of the fluidized bed regenerator. a gas outlet of the third gas-solid separation device is connected to the regenerator gas collection chamber. a catalyst outlet of the third gas-solid separation device is located in the lower part of the fluidized bed regenerator;
the regenerator gas collection chamber is located at the top of the fluidized bed regenerator. the flue gas delivery pipe is connected to the top of the regenerator gas collection chamber.

Optionally, an inlet pipe of the regenerator stripper penetrates the regenerator shell and opens above the regenerator distributor.

Optionally, the third gas-solid separation device employs one or more groups of gas-solid cyclones, each group comprising a first-stage gas-solid cyclone and a second-stage gas-solid cyclone.

The fluidized bed regenerator of the present application can achieve heat balance in the catalytic cracking to light olefins process and restore catalyst activity through regeneration.

As a preferred embodiment, the fluidized bed regenerator comprises: a regenerator shell, a regenerator distributor, a fuel oil distributor, a third gas-solid separation device, a regenerator gas collection chamber, a flue gas delivery pipe, a regenerator stripper, a regenerated catalyst slide valve, and a regenerated catalyst delivery pipe.

The regenerator distributor is located at the bottom of the fluidized bed regenerator. The fuel oil distributor is located above the regenerator distributor. The third gas-solid separation device is located in the upper part of the fluidized bed regenerator. An inlet of the third gas-solid separation device is located in the upper part of the fluidized bed regenerator. A gas outlet of the third gas-solid separation device is connected to the regenerator gas collection chamber. A catalyst outlet of the third gas-solid separation device is located in the lower part of the fluidized bed regenerator. The regenerator gas collection chamber is located at the top of the fluidized bed regenerator. The flue gas delivery pipe is connected to the top of the regenerator gas collection chamber.

The regenerator stripper is located outside the regenerator shell. An inlet pipe of the regenerator stripper penetrates the regenerator shell and opens above the regenerator distributor. An inlet of the regenerated catalyst slide valve is connected to the bottom of the regenerator stripper. An outlet of the regenerated catalyst slide valve is connected to an inlet of the regenerated catalyst delivery pipe. An outlet of the regenerated catalyst delivery pipe is connected to the lower part of the gas-solid separation zone of the high-density fast fluidized bed reactor.

According to a third aspect of the present application, a method for catalytic cracking to produce light olefins is provided. The method employs a continuous reaction-regeneration fluidized bed process.

A method for catalytic cracking to produce light olefins uses the above-described apparatus for catalytic cracking to produce light olefins.

A method for catalytic cracking to produce light olefins comprises the following steps:
introducing vaporized mixed hydrocarbon feedstock into the reaction zone, contacting it with a catalyst, and reacting to form a stream I containing product gas and catalyst;
passing stream I through the delivery pipe, and after gas-solid separation, the catalyst enters the catalyst residence zone;
introducing steam into the catalyst residence zone, where the steam carries a small amount of catalyst from the catalyst residence zone into the gas-solid separation zone;
after gas-solid separation of the product gas and steam carrying catalyst in the gas-solid separation zone, the catalyst returns to the catalyst residence zone, and the product gas and steam proceed to the downstream section;
a portion of the catalyst in the catalyst residence zone enters the reaction zone via the catalyst distribution pipe, and a portion of the catalyst in the catalyst residence zone enters the bottom of the reaction zone via the bottom of the catalyst residence zone;
a portion of the catalyst in the catalyst residence zone enters the fluidized bed regenerator for regeneration, and the regenerated catalyst enters the high-density fast fluidized bed reactor.

Optionally, the process conditions in the reaction zone of the high-density fast fluidized bed reactor are: superficial gas velocity of 1.5-7.0 m/s, temperature of 500-680°C, pressure of 50-250 kPa, bed density of 150-500 kg/m³, reaction contact time of 0.5-2 s.

Optionally, the process conditions in the catalyst residence zone of the high-density fast fluidized bed reactor are: superficial gas velocity of 0.02-0.2 m/s, temperature of 500-680°C, bed density of 600-800 kg/m³.

Optionally, the catalyst circulation intensity from the catalyst residence zone to the reaction zone is 500-1000 kg/(m²·s).

Optionally, the mixed hydrocarbon feedstock is C₄+ hydrocarbons, comprising alkanes and alkenes with carbon number ≥ 4.

Optionally, the mixed hydrocarbon feedstock is C₄-C₁₂ hydrocarbons.

Optionally, the catalyst is ZSM-5 zeolite.

Optionally, in the fluidized bed regenerator, regeneration gas contacts the catalyst, and fuel oil enters the bottom of the fluidized bed regenerator from the fuel oil distributor. The regeneration gas and fuel oil contact and combust. The flue gas formed by combustion carries the catalyst. After gas-solid separation, the catalyst returns to the bottom of the fluidized bed regenerator, and after stripping, enters the gas-solid separation zone of the high-density fast fluidized bed reactor.

Optionally, the regeneration gas is air, and the fuel oil is diesel.

Optionally, the process conditions in the fluidized bed regenerator are: superficial gas velocity of 0.5-2.0 m/s, regeneration temperature of 600-750°C, regeneration pressure of 50-250 kPa, bed density of 200-800 kg/m³.

As a preferred embodiment, the method for catalytic cracking to produce light olefins comprises:
catalyst from the regenerated catalyst delivery pipe enters the gas-solid separation zone of the high-density fast fluidized bed reactor and then enters the catalyst residence zone; vaporized feedstock enters the reaction zone from the feedstock distributor, contacts the catalyst, and produces a product gas containing light olefins; the product gas carries the catalyst through the delivery pipe into the first gas-solid separation device; after gas-solid separation, the catalyst enters the catalyst residence zone; steam enters the catalyst residence zone from the fluidizing steam distributor; the steam carries a small amount of catalyst from the catalyst residence zone into the gas-solid separation zone; the product gas and steam in the gas-solid separation zone, carrying catalyst, enter the second gas-solid separation device; after gas-solid separation, the gas enters the reactor gas collection chamber, and the catalyst returns to the catalyst residence zone; the product gas and steam proceed to the downstream section via the product gas delivery pipe; catalyst from the catalyst residence zone enters the reaction zone via the catalyst distribution pipe; catalyst from the catalyst residence zone enters the bottom of the reaction zone via the bottom of the catalyst residence zone; catalyst from the catalyst residence zone enters the reactor stripper via the catalyst withdrawal pipe; after stripping, the catalyst passes through the spent catalyst slide valve and the spent catalyst delivery pipe into the middle of the fluidized bed regenerator;
regeneration gas enters the bottom of the fluidized bed regenerator from the regenerator distributor; in the fluidized bed regenerator, the regeneration gas contacts the catalyst, and the coke on the catalyst is combusted and removed; fuel oil enters the bottom of the fluidized bed regenerator from the fuel oil distributor; the regeneration gas and fuel oil contact and combust, raising the temperature of the catalyst; the flue gas formed by combustion carries the catalyst into the third gas-solid separation device; after gas-solid separation, the flue gas enters the regenerator gas collection chamber and then passes through the flue gas delivery pipe to the downstream flue gas treatment system; the catalyst returns to the bottom of the fluidized bed regenerator; catalyst from the fluidized bed regenerator enters the regenerator stripper; after stripping, it passes through the regenerated catalyst slide valve and the regenerated catalyst delivery pipe into the high-density fast fluidized bed reactor.

Possible beneficial effects of the present application:
(1) The high-density fast fluidized bed reactor provided in the present application mainly comprises a reaction zone, a catalyst residence zone, and a gas-solid separation zone. The catalyst circulation intensity from the catalyst residence zone to the reaction zone is as high as 500-1000 kg/(m²·s), thereby increasing the bed density in the reaction zone. This achieves a high bed density under high superficial gas velocity conditions, overcoming the negative correlation between light olefin selectivity and feedstock conversion rate.
(2) In the apparatus for catalytic cracking to produce light olefins provided in the present application, fuel oil is injected and combusted in the fluidized bed regenerator to raise the catalyst temperature. The catalyst circulates between the fluidized bed regenerator and the high-density fast fluidized bed reactor, providing heat for the catalytic cracking reaction to produce light olefins, thus achieving heat balance.
(3) The method for catalytic cracking to produce light olefins provided in the present application achieves a continuous mixed hydrocarbon catalytic cracking process for light olefins through a fluidized bed reaction-regeneration process. The reaction contact time of the product gas in the high-density fast fluidized bed reactor is <2 s, effectively improving light olefin selectivity. The single-pass conversion rate of the feedstock is ≥50% wt, the selectivity for ethylene + propylene is ≥70% wt, and the propylene/ethylene (mass ratio) is ≥3.

### BRIEF DESCRIPTION OF THE DRAWINGS

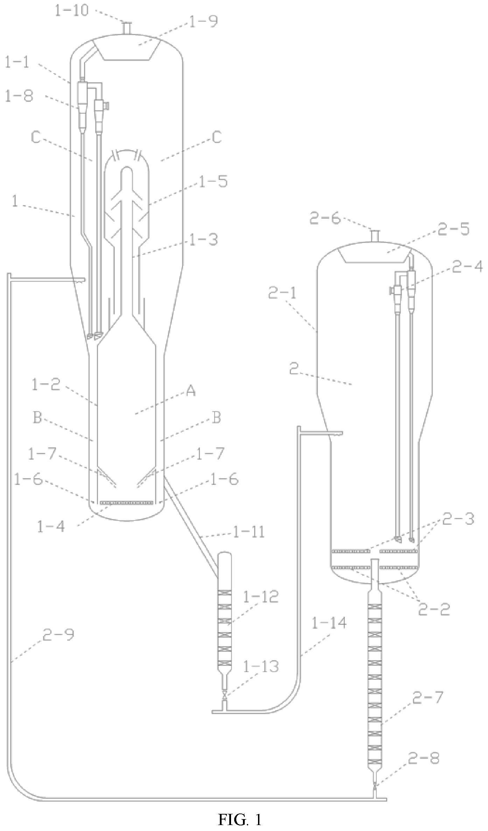

FIG. 1 is a schematic diagram of an apparatus according to one embodiment of the present application.
the reference numerals in fig. 1 are explained as follows:
1 - high-density fast fluidized bed reactor;
1-1 reactor outer shell
1-2 reactor inner shell
1-3 delivery pipe
1-4 feedstock distributor
1-5 first gas-solid separation device
1-6 fluidizing steam distributor
1-7 catalyst distribution pipe
1-8 second gas-solid separation device
1-9 reactor gas collection chamber
1-10 product gas delivery pipe
1-11 catalyst withdrawal pipe
1-12 reactor stripper
1-13 spent catalyst slide valve
1-14 spent catalyst delivery pipe
2 - fluidized bed regenerator;
2-1 regenerator shell
2-2 regenerator distributor
2-3 fuel oil distributor
2-4 third gas-solid separation device
2-5 regenerator gas collection chamber
2-6 flue gas delivery pipe
2-7 regenerator stripper
2-8 regenerated catalyst slide valve
2-9 regenerated catalyst delivery pipe

### DETAILED DESCRIPTION OF THE EMBODIMENTS

The present application is further described below with reference to the accompanying drawings and examples.

As shown in FIG. 1, an apparatus according to one embodiment of the present application comprises a high-density fast fluidized bed reactor (1) and a fluidized bed regenerator (2).
1. The high-density fast fluidized bed reactor (1) comprises: a reactor outer shell (1-1), a reactor inner shell (1-2), a delivery pipe (1-3), a feedstock distributor (1-4), a first gas-solid separation device (1-5), a fluidizing steam distributor (1-6), a catalyst distribution pipe (1-7), a second gas-solid separation device (1-8), a reactor gas collection chamber (1-9), a product gas delivery pipe (1-10), a catalyst withdrawal pipe (1-11), a reactor stripper (1-12), a spent catalyst slide valve (1-13), and a spent catalyst delivery pipe (1-14). The region enclosed by the reactor inner shell (1-2) is a reaction zone (A). The annular region enclosed by the reactor outer shell (1-1) and the reactor inner shell (1-2) is a catalyst residence zone (B). The bottom of the reaction zone (A) is in communication with the bottom of the catalyst residence zone (B). The region enclosed by the reactor outer shell (1-1) and the delivery pipe (1-3) is a gas-solid separation zone (C). The catalyst residence zone (B) is in communication with the gas-solid separation zone (C) and is located below the gas-solid separation zone (C). The feedstock distributor (1-4) is located at the bottom of the reaction zone (A). The delivery pipe (1-3) is located in the central region of the upper middle part of the high-density fast fluidized bed reactor. The bottom end of the delivery pipe (1-3) is connected to the top of the reaction zone (A). The outlet of the delivery pipe (1-3) is connected to the inlet of the first gas-solid separation device (1-5). The first gas-solid separation device (1-5) is located in the gas-solid separation zone (C). The catalyst outlet of the first gas-solid separation device (1-5) is located in the lower part of the gas-solid separation zone (C). The gas outlet of the first gas-solid separation device (1-5) is located in the upper part of the gas-solid separation zone (C). The fluidizing steam distributor (1-6) is located at the bottom of the catalyst residence zone (B). The catalyst distribution pipe (1-7) penetrates the reactor inner shell (1-2), connecting the catalyst residence zone (B) and the reaction zone (A). The lower surface of the catalyst distribution pipe (1-7) has openings. The second gas-solid separation device (1-8) is located in the gas-solid separation zone (C). The inlet of the second gas-solid separation device (1-8) is located in the gas-solid separation zone (C). The gas outlet of the second gas-solid separation device (1-8) is connected to the reactor gas collection chamber (1-9). The catalyst outlet of the second gas-solid separation device (1-8) is located in the lower part of the gas-solid separation zone (C). The reactor gas collection chamber (1-9) is located at the top of the high-density fast fluidized bed reactor. The product gas delivery pipe (1-10) is connected to the top of the reactor gas collection chamber (1-9). The catalyst withdrawal pipe (1-11) penetrates the reactor outer shell (1-1) and is located in the lower part of the catalyst residence zone (B). The reactor stripper (1-12) is connected to the catalyst withdrawal pipe (1-11). The inlet of the spent catalyst slide valve (1-13) is connected to the bottom of the reactor stripper (1-12). The outlet of the spent catalyst slide valve (1-13) is connected to the inlet of the spent catalyst delivery pipe (1-14). The outlet of the spent catalyst delivery pipe (1-14) is connected to the fluidized bed regenerator (2).
2. The fluidized bed regenerator (2) comprises: a regenerator shell (2-1), a regenerator distributor (2-2), a fuel oil distributor (2-3), a third gas-solid separation device (2-4), a regenerator gas collection chamber (2-5), a flue gas delivery pipe (2-6), a regenerator stripper (2-7), a regenerated catalyst slide valve (2-8), and a regenerated catalyst delivery pipe (2-9). The regenerator distributor (2-2) is located at the bottom of the fluidized bed regenerator (2). The fuel oil distributor (2-3) is located above the regenerator distributor (2-2). The third gas-solid separation device (2-4) is located in the upper part of the fluidized bed regenerator (2). The inlet of the third gas-solid separation device (2-4) is located in the upper part of the fluidized bed regenerator (2). The gas outlet of the third gas-solid separation device (2-4) is connected to the regenerator gas collection chamber (2-5). The catalyst outlet of the third gas-solid separation device (2-4) is located in the lower part of the fluidized bed regenerator (2). The regenerator gas collection chamber (2-5) is located at the top of the fluidized bed regenerator (2). The flue gas delivery pipe (2-6) is connected to the top of the regenerator gas collection chamber (2-5). The regenerator stripper (2-7) is located outside the regenerator shell (2-1). The inlet pipe of the regenerator stripper (2-7) penetrates the regenerator shell (2-1) and opens above the regenerator distributor (2-2). The inlet of the regenerated catalyst slide valve (2-8) is connected to the bottom of the regenerator stripper (2-7). The outlet of the regenerated catalyst slide valve (2-8) is connected to the inlet of the regenerated catalyst delivery pipe (2-9). The outlet of the regenerated catalyst delivery pipe (2-9) is connected to the lower part of the gas-solid separation zone (C) of the high-density fast fluidized bed reactor (1).

Specifically, the first gas-solid separation device (1-5) employs an inertial separator to achieve rapid separation of product gas and catalyst. Specifically, the second gas-solid separation device (1-8) employs one or more groups of gas-solid cyclones, each group comprising a first-stage gas-solid cyclone and a second-stage gas-solid cyclone. Specifically, the third gas-solid separation device (2-4) employs one or more groups of gas-solid cyclones, each group comprising a first-stage gas-solid cyclone and a second-stage gas-solid cyclone.

In a specific embodiment, a method for catalytic cracking to produce light olefins comprises the following steps:
1. Catalyst from the regenerated catalyst delivery pipe (2-9) enters the gas-solid separation zone (C) of the high-density fast fluidized bed reactor (1) and then enters the catalyst residence zone (B). Vaporized feedstock enters the reaction zone (A) from the feedstock distributor (1-4), contacts the catalyst, and produces a product gas containing light olefins. The product gas carries the catalyst through the delivery pipe (1-3) into the first gas-solid separation device (1-5). After gas-solid separation, the catalyst enters the catalyst residence zone (B). Steam enters the catalyst residence zone (B) from the fluidizing steam distributor (1-6). The steam carries a small amount of catalyst from the catalyst residence zone (B) into the gas-solid separation zone (C). The product gas and steam in the gas-solid separation zone (C), carrying catalyst, enter the second gas-solid separation device (1-8). After gas-solid separation, the gas enters the reactor gas collection chamber (1-9), and the catalyst returns to the catalyst residence zone (B). The product gas and steam proceed to the downstream section via the product gas delivery pipe (1-10). Catalyst from the catalyst residence zone (B) enters the reaction zone (A) via the catalyst distribution pipe (1-7). Catalyst from the catalyst residence zone (B) enters the bottom of the reaction zone (A) via the bottom of the catalyst residence zone (B). Catalyst from the catalyst residence zone (B) enters the reactor stripper (1-12) via the catalyst withdrawal pipe (1-11). After stripping, the catalyst passes through the spent catalyst slide valve (1-13) and the spent catalyst delivery pipe (1-14) into the middle part of the fluidized bed regenerator (2).
2. Regeneration gas enters the bottom of the fluidized bed regenerator (2) from the regenerator distributor (2-2). In the fluidized bed regenerator (2), the regeneration gas contacts the catalyst, and the coke on the catalyst is combusted and removed. Fuel oil enters the bottom of the fluidized bed regenerator (2) from the fuel oil distributor (2-3). The regeneration gas and fuel oil contact and combust, raising the temperature of the catalyst. The flue gas formed by combustion carries the catalyst into the third gas-solid separation device (2-4). After gas-solid separation, the flue gas enters the regenerator gas collection chamber (2-5) and then passes through the flue gas delivery pipe (2-6) to the downstream flue gas treatment system. The catalyst returns to the bottom of the fluidized bed regenerator (2). Catalyst from the fluidized bed regenerator (2) enters the regenerator stripper (2-7). After stripping, it passes through the regenerated catalyst slide valve (2-8) and the regenerated catalyst delivery pipe (2-9) into the high-density fast fluidized bed reactor (1).

The calculation methods for feedstock single-pass conversion rate and selectivity for ethylene + propylene in the described method are as follows: 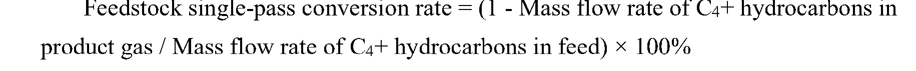 Feedstock single-pass conversion rate = (1 - Mass flow rate of C4+ hydrocarbons in product gas / Mass flow rate of C4+ hydrocarbons in feed) × 100% 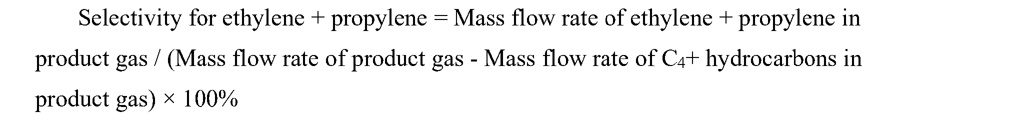 Selectivity for ethylene + propylene = Mass flow rate of ethylene + propylene in product gas / (Mass flow rate of product gas - Mass flow rate of C4+ hydrocarbons in product gas) × 100%

### Example 1

This example uses the apparatus shown in FIG. 1.

In this example, the feedstock is C₄-C₆ hydrocarbons, containing 91% wt olefins and 9% wt alkanes. The catalyst is a ZSM-5 zeolite catalyst. The process conditions in the reaction zone (A) of the high-density fast fluidized bed reactor (1) are: superficial gas velocity of 1.5 m/s, temperature of 500°C, pressure of 250 kPa, bed density of 500 kg/m³, reaction contact time of 2 s. The process conditions in the catalyst residence zone (B) are: superficial gas velocity of 0.10 m/s, temperature of 500°C, bed density of 670 kg/m³. The catalyst circulation intensity from the catalyst residence zone (B) to the reaction zone (A) is 500 kg/(m²·s).

The regeneration gas is air. The fuel oil is diesel. The process conditions in the fluidized bed regenerator (2) are: superficial gas velocity of 0.5 m/s, regeneration temperature of 600°C, regeneration pressure of 250 kPa, bed density of 800 kg/m³.

The feedstock single-pass conversion rate is 81% wt, the selectivity for ethylene + propylene is 83% wt, and the propylene/ethylene (mass ratio) is 3.

### Example 2

This example uses the apparatus shown in FIG. 1.

In this example, the feedstock is C₄-C₆ hydrocarbons, containing 46% wt olefins and 54% wt alkanes. The catalyst is a ZSM-5 zeolite catalyst. The process conditions in the reaction zone (A) of the high-density fast fluidized bed reactor (1) are: superficial gas velocity of 2.6 m/s, temperature of 600°C, pressure of 170 kPa, bed density of 310 kg/m³, reaction contact time of 1.2 s. The process conditions in the catalyst residence zone (B) are: superficial gas velocity of 0.2 m/s, temperature of 600°C, bed density of 600 kg/m³. The catalyst circulation intensity from the catalyst residence zone (B) to the reaction zone (A) is 720 kg/(m²·s).

The regeneration gas is air. The fuel oil is diesel. The process conditions in the fluidized bed regenerator (2) are: superficial gas velocity of 2.0 m/s, regeneration temperature of 680°C, regeneration pressure of 170 kPa, bed density of 200 kg/m³.

The feedstock single-pass conversion rate is 51% wt, the selectivity for ethylene + propylene is 75% wt, and the propylene/ethylene (mass ratio) is 4.2.

### Example 3

This example uses the apparatus shown in FIG. 1.

In this example, the feedstock is C₅-C₁₂ hydrocarbons, containing 64% wt olefins and 36% wt alkanes. The catalyst is a ZSM-5 zeolite catalyst. The process conditions in the reaction zone (A) of the high-density fast fluidized bed reactor (1) are: superficial gas velocity of 4.1 m/s, temperature of 650°C, pressure of 110 kPa, bed density of 190 kg/m³, reaction contact time of 0.8 s. The process conditions in the catalyst residence zone (B) are: superficial gas velocity of 0.08 m/s, temperature of 650°C, bed density of 720 kg/m³. The catalyst circulation intensity from the catalyst residence zone (B) to the reaction zone (A) is 810 kg/(m²·s).

The regeneration gas is air. The fuel oil is diesel. The process conditions in the fluidized bed regenerator (2) are: superficial gas velocity of 1.5 m/s, regeneration temperature of 720°C, regeneration pressure of 110 kPa, bed density of 340 kg/m³.

The feedstock single-pass conversion rate is 76% wt, the selectivity for ethylene + propylene is 77% wt, and the propylene/ethylene (mass ratio) is 6.3.

### Example 4

This example uses the apparatus shown in FIG. 1.

In this example, the feedstock is C₅-C₁₂ hydrocarbons, containing 8% wt olefins and 92% wt alkanes. The catalyst is a ZSM-5 zeolite catalyst. The process conditions in the reaction zone (A) of the high-density fast fluidized bed reactor (1) are: superficial gas velocity of 7.0 m/s, temperature of 680°C, pressure of 50 kPa, bed density of 150 kg/m³, reaction contact time of 0.5 s. The process conditions in the catalyst residence zone (B) are: superficial gas velocity of 0.02 m/s, temperature of 680°C, bed density of 800 kg/m³. The catalyst circulation intensity from the catalyst residence zone (B) to the reaction zone (A) is 1000 kg/(m²·s).

The regeneration gas is air. The fuel oil is diesel. The process conditions in the fluidized bed regenerator (2) are: superficial gas velocity of 0.8 m/s, regeneration temperature of 750°C, regeneration pressure of 50 kPa, bed density of 520 kg/m³.

The feedstock single-pass conversion rate is 63% wt, the selectivity for ethylene + propylene is 70% wt, and the propylene/ethylene (mass ratio) is 8.5.

The above examples are merely few examples of the present application, and do not limit the present application in any form. Although the present application is disclosed as above with preferred examples, the present application is not limited thereto. Some changes or modifications made by any technical personnel familiar with the profession using the technical content disclosed above without departing from the scope of the technical solutions of the present application are equivalent to equivalent implementation cases and fall within the scope of the technical solutions.

## Claims

1. A high-density fast fluidized bed reactor, wherein the high-density fast fluidized bed reactor comprises a reactor outer shell, a reactor inner shell, and a delivery pipe;
the reactor inner shell is located in the lower part of the reactor outer shell;
the delivery pipe is located in the central region of the upper middle part of the high-density fast fluidized bed reactor;
the region enclosed by the reactor inner shell is a reaction zone;
the bottom end of the delivery pipe is connected to the top of the reaction zone;
the annular region enclosed by the reactor outer shell and the reactor inner shell is a catalyst residence zone;
the bottom of the reaction zone is in communication with the bottom of the catalyst residence zone;
the region enclosed by the reactor outer shell and the delivery pipe is a gas-solid separation zone;
the catalyst residence zone is in communication with the gas-solid separation zone and is located below the gas-solid separation zone.

2. The high-density fast fluidized bed reactor according to claim 1, wherein the high-density fast fluidized bed reactor comprises a catalyst distribution pipe, a fluidizing steam distributor, and a feedstock distributor;
the catalyst distribution pipe penetrates the reactor inner shell, connecting the catalyst residence zone and the reaction zone;
the fluidizing steam distributor is located at the bottom of the catalyst residence zone;
the feedstock distributor is located at the bottom of the reaction zone.

3. The high-density fast fluidized bed reactor according to claim 1 or 2, wherein the lower surface of the catalyst distribution pipe has openings.

4. The high-density fast fluidized bed reactor according to any one of claims 1 to 3, wherein the high-density fast fluidized bed reactor comprises a first gas-solid separation device and a second gas-solid separation device;
the first gas-solid separation device and the second gas-solid separation device are located in the gas-solid separation zone;
the inlet of the first gas-solid separation device is connected to the outlet of the delivery pipe;
the catalyst outlet of the first gas-solid separation device is located in the lower part of the gas-solid separation zone, and the gas outlet of the first gas-solid separation device is located in the upper part of the gas-solid separation zone;
the catalyst outlet of the second gas-solid separation device is located in the lower part of the gas-solid separation zone.

5. The high-density fast fluidized bed reactor according to any one of claims 1 to 4, wherein the first gas-solid separation device employs an inertial separator.

6. The high-density fast fluidized bed reactor according to any one of claims 1 to 5, wherein the second gas-solid separation device employs one or more groups of gas-solid cyclones, each group comprising a first-stage gas-solid cyclone and a second-stage gas-solid cyclone.

7. The high-density fast fluidized bed reactor according to any one of claims 1 to 6, wherein the high-density fast fluidized bed reactor comprises a reactor gas collection chamber and a product gas delivery pipe;
the reactor gas collection chamber is located at the top of the high-density fast fluidized bed reactor;
the product gas delivery pipe is connected to the top of the reactor gas collection chamber;
the gas outlet of the second gas-solid separation device is connected to the reactor gas collection chamber.

8. An apparatus for catalytic cracking to produce light olefins, wherein the apparatus comprises the high-density fast fluidized bed reactor according to any one of claims 1 to 7 and a fluidized bed regenerator;
a catalyst withdrawal pipe penetrates the reactor outer shell and is located in the lower part of the catalyst residence zone; a reactor stripper is connected to the catalyst withdrawal pipe, an inlet of a spent catalyst slide valve is connected to the bottom of the reactor stripper, an outlet of the spent catalyst slide valve is connected to an inlet of a spent catalyst delivery pipe, an outlet of the spent catalyst delivery pipe is connected to the middle part of the fluidized bed regenerator;
a regenerator stripper is located at the bottom of the fluidized bed regenerator, an inlet of a regenerated catalyst slide valve is connected to the bottom of the regenerator stripper, an outlet of the regenerated catalyst slide valve is connected to an inlet of a regenerated catalyst delivery pipe, an outlet of the regenerated catalyst delivery pipe is connected to the lower part of the gas-solid separation zone of the high-density fast fluidized bed reactor.

9. The apparatus according to claim 8, wherein the fluidized bed regenerator comprises a regenerator shell, a regenerator distributor, a fuel oil distributor, a third gas-solid separation device, a regenerator gas collection chamber, and a flue gas delivery pipe;
the regenerator distributor is located at the bottom of the fluidized bed regenerator;
the fuel oil distributor is located above the regenerator distributor;
the third gas-solid separation device is located in the upper part of the fluidized bed regenerator, an inlet of the third gas-solid separation device is located in the upper part of the fluidized bed regenerator, a gas outlet of the third gas-solid separation device is connected to the regenerator gas collection chamber, a catalyst outlet of the third gas-solid separation device is located in the lower part of the fluidized bed regenerator;
the regenerator gas collection chamber is located at the top of the fluidized bed regenerator, and the flue gas delivery pipe is connected to the top of the regenerator gas collection chamber.

10. The apparatus according to claim 8 or 9, wherein an inlet pipe of the regenerator stripper penetrates the regenerator shell and opens above the regenerator distributor.

11. The apparatus according to any one of claims 8 to 10, wherein the third gas-solid separation device employs one or more groups of gas-solid cyclones, each group comprising a first-stage gas-solid cyclone and a second-stage gas-solid cyclone.

12. A method for catalytic cracking to produce light olefins, wherein the method uses the apparatus according to any one of claims 8 to 11.

13. The method according to claim 12, wherein it comprises the following steps:
introducing vaporized mixed hydrocarbon feedstock into the reaction zone, contacting it with a catalyst, and reacting to form a stream I containing product gas and catalyst;
passing stream I through the delivery pipe, and after gas-solid separation, the catalyst enters the catalyst residence zone;
introducing steam into the catalyst residence zone, where the steam carries a small amount of catalyst from the catalyst residence zone into the gas-solid separation zone;
after gas-solid separation of the product gas and steam carrying catalyst in the gas-solid separation zone, the catalyst returns to the catalyst residence zone, and the product gas and steam proceed to the downstream section;
a portion of the catalyst in the catalyst residence zone enters the reaction zone via the catalyst distribution pipe, and a portion of the catalyst in the catalyst residence zone enters the bottom of the reaction zone via the bottom of the catalyst residence zone;
a portion of the catalyst in the catalyst residence zone enters the fluidized bed regenerator for regeneration, and the regenerated catalyst enters the high-density fast fluidized bed reactor.

14. The method according to claim 12 or 13, wherein the process conditions in the reaction zone of the high-density fast fluidized bed reactor are: superficial gas velocity of 1.5-7.0 m/s, temperature of 500-680°C, pressure of 50-250 kPa, bed density of 150-500 kg/m³, reaction contact time of 0.5-2 s.

15. The method according to any one of claims 12 to 14, wherein the process conditions in the catalyst residence zone of the high-density fast fluidized bed reactor are: superficial gas velocity of 0.02-0.2 m/s, temperature of 500-680°C, bed density of 600-800 kg/m³.

16. The method according to any one of claims 12 to 15, wherein the catalyst circulation intensity from the catalyst residence zone to the reaction zone is 500-1000 kg/(m²·s).

17. The method according to any one of claims 12 to 16, wherein the mixed hydrocarbon feedstock is C₄+ hydrocarbons, comprising alkanes and alkenes with carbon atom number ≥ 4.

18. The method according to any one of claims 12 to 17, wherein the mixed hydrocarbon feedstock is C₄-C₁₂ hydrocarbons.

19. The method according to any one of claims 12 to 18, wherein the catalyst is ZSM-5 zeolite.

20. The method according to any one of claims 12 to 19, wherein in the fluidized bed regenerator, regeneration gas contacts the catalyst, fuel oil enters the bottom of the fluidized bed regenerator from the fuel oil distributor, the regeneration gas and fuel oil contact and combust, the flue gas formed by combustion carries the catalyst, after gas-solid separation, the catalyst returns to the bottom of the fluidized bed regenerator, and after stripping, enters the gas-solid separation zone of the high-density fast fluidized bed reactor.

21. The method according to any one of claims 12 to 20, wherein the regeneration gas is air, and the fuel oil is diesel.

22. The method according to any one of claims 12 to 21, wherein the process conditions in the fluidized bed regenerator are: superficial gas velocity of 0.5-2.0 m/s, regeneration temperature of 600-750°C, regeneration pressure of 50-250 kPa, bed density of 200-800 kg/m³.
